# EUROPÄISCHE PATENTSCHRIFT

(11) **EP 1 526 974 B1**
(45) Veröffentlichungstag und Bekanntmachung des Hinweises auf die Patenterteilung: **21.01.2009**
(21) Anmeldenummer: 03757010.8
(22) Anmeldetag: 02.06.2003
(51) Int. Cl.: B60H 1/00

(54) **KLIMAANLAGE FÜR EIN KRAFTFAHRZEUG**
AIR CONDITIONER FOR A MOTOR VEHICLE
INSTALLATION DE CLIMATISATION POUR VEHICULE AUTOMOBILE

(30) Priorität: 06.06.2002 DE 10225055
(43) Veröffentlichungstag der Anmeldung: 04.05.2005
(73) Patentinhaber: Behr GmbH & Co. KG, 70469 Stuttgart (DE)
(72) Erfinder: FEUERECKER, Günther, 70567 Stuttgart (DE); KEMLE, Andreas, 74321 Bietigheim-Bissingen (DE)
(74) Vertreter: Grauel, Andreas
(86) Internationale Anmeldenummer: PCT/EP2003/005751
(87) Internationale Veröffentlichungsnummer: WO 2003/104000

(56) Entgegenhaltungen:
- EP-A- 1 295 739
- DE-A- 19 644 583
- US-A- 5 497 941
- US-A- 5 740 681
- US-A- 6 041 849

## Beschreibung

Die Erfindung betrifft eine Klimaanlage für ein Kraftfahrzeug, gemäß dem Oberbegriff des Anspruchs 1.

Insbesondere bei Niederverbrauchsfahrzeugen tritt häufig ein Heizleistungsdefizit beim Aufheizen zu Fahrtbeginn an kalten Tagen auf, was die Verwendung von Zuheizmaßnahmen erforderlich macht. Um den Energieverbrauch von Kraftfahrzeugen zu senken und Energie zu sparen, werden in Klimaanlagen von Niederverbrauchsfahrzeugen Wärmepumpensysteme verwendet. Viele Wärmepumpen benutzen als Wärmequelle die Umgebungsluft. Da hier Umgebungswärme zum Heizen nutzbar gemacht wird, können solche Systeme einen vorteilhaften Energieverbrauch aufweisen. Bei sinkenden Außentemperaturen sinkt auch das Wärmeangebot einer solchen Wärmepumpe. Dies steht in Gegensatz zum mit sinkender Umgebungstemperatur steigenden Zuheizbedarf, so dass solche Wärmepumpensysteme bald eine Einsatzgrenze erreichen, bei der sie den Leistungsbedarf nicht mehr decken können. Weitere Probleme, wie z.B. das Bereifen bzw. Vereisen des Wärmeübertragers, welcher der Umgebungsluft Wärme entzieht, machen zusätzliche Maßnahmen erforderlich.

Viele Wärmepumpen nutzen auch den Verdampfer, der im Kühlbetrieb die Kabinen-Zuluft abkühlt, zusätzlich als Heizer, der im Heizbetrieb die Kabinen-Zuluft erwärmt. Dies hat jedoch den Nachteil, dass sich am Verdampfer/Heizer beim Kühlen und Entfeuchten Kondenswasser niederschlägt. Wird dieser feuchte Verdampfer zum Heizen verwendet, kommt es zum Beschlagen der Scheiben (Flash-Fogging), was aus Sicherheitsgründen unbedingt vermieden werden muss. Eine solche Konstellation bei der Heizen und Kühlen zeitlich nahe aufeinanderfolgen, kommt häufig in der klimatischen Übergangszeit im Frühjahr und Herbst vor.

Zuverlässige Abhilfe ohne Einschränkungen schafft hier nur die Hinzunahme eines weiteren Wärmeübertragers im Zuluftstrom, der nur zum Heizen verwendet wird, während der Verdampfer ausschließlich zum Kühlen und Entfeuchten verwendet wird, wie es beispielsweise in der DE 39 07 201 beschrieben wird.

Wird als Wärmequelle das Motorkühlwasser, das von der Motorabwärme erwärmt wird, genutzt, so ist das System nicht so stark von den Umgebungsbedingungen abhängig, da sich das Motorkühlwasser im Laufe der Zeit schnell erwärmt und so für die Wärmepumpe eine ergiebige und leistungsfähige Wärmequelle zur Verfügung steht. Dies ist bspw. in der DE 36 35 353 offenbart.

In der DE 196 44 583 A1 wird zum einen vorgeschlagen, die Motorabwärme als Wärmequelle (beispielsweise auch das Motorkühlwasser) zu verwenden, und zum anderen wird vorgeschlagen, die Wärme über einen eigenen Wärmeübertrager an die Kabinenzuluft zu übertragen. Ein solches System enthält mindestens vier Wärmeübertrager:
1. Einen Wärmeübertrager, welcher im Kühlbetrieb die Abwärme des Kreisprozesses an die Umgebung abführt, (dieser wird bei herkömmlichen Anlagen mit einem kondensierenden Arbeitsmittel als Kondensator, bei den überkritisch betriebenen CO₂-Anlagen als Gaskühler bezeichnet),
2. einen Verdampfer, der im Kühlbetrieb die Kabinenzuluft abkühlt und entfeuchtet,
3. einen Wärmeübertrager, der die Kabinenzuluft im Heizbetrieb aufheizt (Heizer), und
4. einen Wärmeübertrager, der im Heizbetrieb Motorabwärme aufnimmt (Wärmepumpen-Verdampfer)

Im überkritischen CO₂-Prozeß ist noch ein innerer Wärmeübertrager, welcher Wärme zwischen Hochdruck- und Niederdruckseite tauscht, vorgesehen, um die Leistung und den Wirkungsgrad zu erhöhen.

Somit sind im Heiz- und im Kühlbetrieb jeweils zwei Wärmeübertrager im Betrieb, die beiden anderen sind außer Funktion. Damit kann es zu einem sehr unterschiedlichen Kältemittelbedarf bei den beiden Betriebszuständen kommen. Beim Heizbetrieb kann das Kältemittel in den stillgelegten Komponenten, die mit der kalten Umgebungsluft in Verbindung stehen, vollständig kondensieren, so dass im Heizbetrieb der größte Kältemittelbedarf herrscht. Ein vollständiges Absperren der stillgelegten Zweige kann die Kältemittelverlagerung nicht sicher unterbinden, da durch kleine Undichtigkeiten der Ventile oder ungünstige Konstellationen beim Umschalten erhebliche Mengen in diese stillgelegten Teile des Kältemittelkreislaufs gelangen kann. Diese Kältemittelverlagerung kann prinzipiell durch Vorhalten einer ausreichenden Kältemittelmenge und Abpuffern dieser Kältemittelmenge durch einen ausreichend großen Sammler geschehen. Dies soll jedoch aus Bauraumgründen und insbesondere beim giftigen Kältemittel Kohlendioxid aus Sicherheitsgründen vermieden werden.

Es ist Aufgabe der Erfindung, die vorgenannten Nachteile zu vermeiden und einen verbesserten Kältemittelkreislauf zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist bei Bedarf im Kältemittelkreislauf der Klimaanlage eine Kältemittelrückführung aus im Heizbetrieb nicht benötigten Teilen des Kältemittelkreislaufs in im Heizbetrieb aktive Teile des Kältemittelkreislaufs vorgesehen. Auf diese Weise kann die Kältemittelverlagerung in die stillgelegten Teile des Kältemittelkreislaufs bewältigt werden. Eine Bevorratung großer Kältemittelmengen zum Ausgleich des Verlusts an Kältemittel in die stillgelegten Teile des Kältemittelkreislaufs ist nicht erforderlich.

Hinderlich für eine Kältemittelrückführung sind die im Verlauf des Betriebes mit der Temperatur des Motorkühlmittels ansteigenden Saugdrücke, so dass die stillgelegten Teile des Kältemittelkreislaufs nicht durch Verbinden mit der Saugseite des Kompressors leergesaugt werden können. Diese Schwierigkeit wird dadurch gelöst, dass der Wärmepumpen-Verdampfer vom Zufluss des Kühlmittels, welches die Wärmequelle darstellt, trennbar ist. Beim Abtrennen des Wärmepumpen-Verdampfers vom Kühlmittelkreislauf, der vorzugsweise ein Motorkühlmittelkreislauf ist, kühlt sich der Wärmepumpen-Verdampfer ab und damit verbunden sinkt der Saugdruck. Wenn der Saugdruck kleiner ist als der durch die Umgebungstemperatur bestimmte Dampfdruck in den stillgelegten Teilen des Kältemittelkreislaufs, kann Kältemittel aus diesen in den aktiven Teil des Kältemittelkreislaufs strömen und damit in den Kältemittelkreislauf zurückgeführt werden.

Vorzugsweise sind Mittel zum Ermitteln eines Kältemittelbedarfs, insbesondere Mittel zum Ermitteln, ob ausreichend Kältemittel in dem im Heizbetrieb von Kältemittel durchströmten Teil des Kältemittelkreislaufs vorhanden ist, vorgesehen, welche den Zustand des Kältemittels überwachen. Hierbei handelt es sich vorzugsweise um mindestens einen Temperatur- oder Drucksensor.

Der Temperatursensor ist vorzugsweise im Kältemittelkreislauf, in Strömungsrichtung des Kältemittels gesehen, nach dem Kompressor und vor einem Heizer angeordnet. Der Drucksensor ist vorzugsweise im Kältemittelkreislauf, in Strömungsrichtung des Kältemittels gesehen, vor dem Kompressor angeordnet.

Zusätzlich können auch die folgenden Parameter "Kühlmitteltemperatur am Wärmepumpen-Verdampfer", "Kältemitteltemperatur vor dem Wärmepumpen-Verdampfer", "Kältemitteltemperatur nach dem Wärmepumpen-Verdampfer", "Kompressordrehzahl", "Lufttemperaturen im Klimagerät", "Hochdruck" und/oder "Saugdruck" für die Überwachung ausgewertet werden.

Vorzugsweise ist im Kältemittelkreislauf ein Rückschlagventil vorgesehen, welches im Heizbetrieb aktive Teile des Kältemittelkreislaufs von im Heizbetrieb stillgelegten Teilen des Kältemittelkreislaufs trennt und im Kältemittelrückführungsbetrieb Kältemittel von den im Heizbetrieb stillgelegten Teilen des Kältemittelkreislaufs zu den im Heizbetrieb aktiven Teilen des Kältemittelkreislaufs durchläßt.

Beim Betreiben einer entsprechenden Klimaanlage wird zur Ermittlung eines Bedarfs an Kältemittel die Heißgastemperatur und/oder der Saugdruck und/oder die Überhitzung des Kältemittels nach dem Wärmepumpen-Verdampfer überwacht, wobei bei Überschreiten eines Heißgastemperatur-Schwellwertes oder bei Unterschreiten eines Saugdruck-Schwellwertes oder bei Überschreiten eines Schwellwertes für die Überhitzung des Kältemittels am Austritt des Wärmepumpen-Verdampfers der Kältemittelrückführbetrieb eingeleitet wird. Vorzugsweise wird das Ende der Kältemittelrückführung nach einer vorgegebenen Zeit oder nach Unterschreiten einer vorgegebenen, minimalen Heizleistung (Abhängig von Außentemperatur und Kompressordrehzahl) beendet. Ferner sind entsprechende Mittel vorgesehen, um zu ermitteln, wenn zu viel Kältemittel in die stillgelegten Teile des Kältemittelkreislaufs versackt ist. Wird ein entsprechender Zustand ermittelt, so wird so viel Kältemittel aus den stillgelegten Teilen des Kältemittelkreislaufs in die aktiven Teile des Kältemittelkreislaufs zurückgeführt, dass wieder ein optimaler Betrieb möglich ist.

Vorzugsweise wird bei der Kältemittelrückführung ein Expansionsventil in einem im Heizbetrieb inaktiven Teil des Kältemittelkreislaufs geschlossen und die Belüftung auf Umluft geschaltet. Dadurch ist der Druck im Verdampfer erhöht und die Kältemittelrückführung wird durch diese Maßnahme beschleunigt. Wenn dies nicht ausreicht und der Saugdruck vor Erreichen einer ausreichenden Rückführung entsprechend stark abfällt, wird vorzugsweise das genannte Expansionsventil wieder geöffnet, so dass dann auch der Gaskühler leergesaugt wird.

Vorzugsweise wird beim Leersaugen des Gaskühlers im Kältemittelrückführbetrieb ein zugehöriger Lüfter zugeschaltet, um einen Gaskühler, der Teil des Kältemittelkreislaufs ist, mit Umgebungsluft zu beaufschlagen. Dadurch kühlt sich der Gaskühler während das Kältemittel in ihm verdampft nicht so schnell ab, und der Saugdruck bleibt auf einem höheren Niveau als ohne Lüfterbetrieb. Insgesamt ergibt sich durch den Lüftereinsatz eine beschleunigte Kältemittelrückführung.

Vorzugsweise wird im Heizbetrieb, wenn der Saugdruck im Kältemittelkreislauf einen oberen Grenzwert überschreitet, der Wärmepumpen-Verdampfer vom Kühlmittelkreislauf abgetrennt. Das Überschreiten des Grenzwertes zeigt an, dass der aktive Kältemittelkreislauf überfüllt ist. Die hohen Saugdrücke können bei dem beschriebenen überfüllten Zustand bei gleichzeitig hohen Kühlmitteltemperaturen im Heizbetrieb auftreten. Durch Abtrennen des Wärmetauschers sinkt der Saugdruck wieder ab, wodurch ein Überschreiten zulässiger Saugdruckwerte vermieden wird. Sinkt der Saugdruck anschließend unter einen vorgegebenen Schwellwert, dann kann der Wärmepumpen-Verdampfer wieder in den Kühlmittelkreislauf eingekoppelt werden.

Alternativ ist über den Kühlmittelfluß im Verdampfer der Saugdruck einstellbar und kann durch Veränderung des Kühlmittelflußes im Verdampfer stabil auf einen konstanten Wert, vorzugsweise den möglichen Maximalwert, eingestellt werden. Dadurch werden Schwankungen der Betriebszustände, die bei der oben erwähnten 2-Punkt-Regelung auftreten können, vermieden. Der maximale Kühlmittelfluß im Verdampfer entspricht bei einer vorteilhaften Ausführungsform dem maximalen Saugdruck. Der Kühlmittelfluß wird dabei durch ein getaktetes Ventil oder ein Proportionalvertil eingestellt.

Im folgenden wird die Erfindung anhand eines Ausführungsbeispiels unter Bezugnahme auf die Zeichnung im einzelnen erläutert. In der Zeichnung zeigen:
- Fig. 1: eine erfindungsgemäße Schaltung einer Klimaanlage im Kühlbetrieb,
- Fig. 2: die Schaltung von Fig. 1 im Heizbetrieb, und
- Fig. 3: die Schaltung von Fig. 1 bei der Kältemittelrückführung.

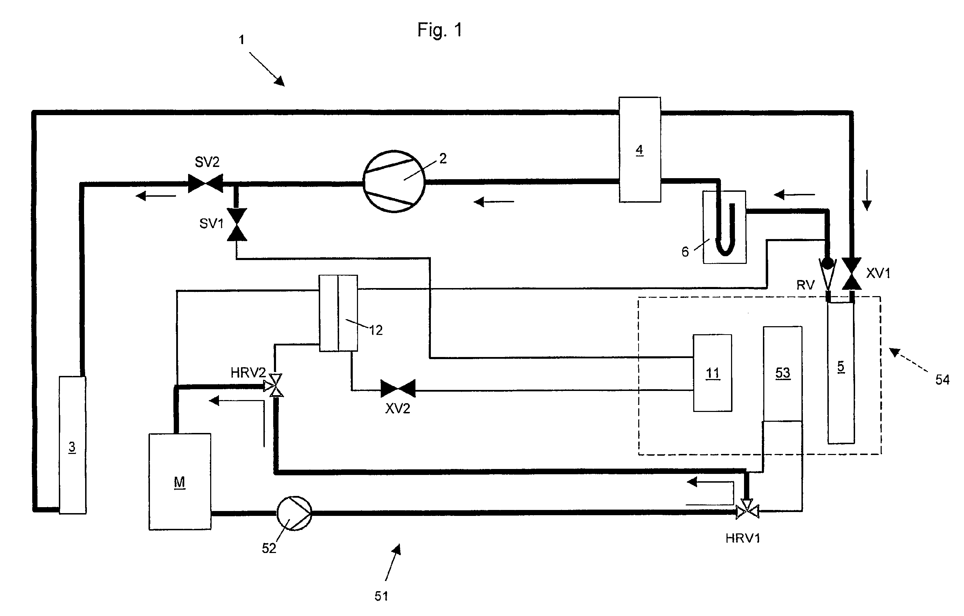

Fig. 1 zeigt einen Kältemittelkreislauf 1 einer Klimaanlage im Kühlbetrieb, wobei die aktiven Teile, d.h. die in Betrieb befindlichen Teile, des Leitungssystems stärker als die stillgelegten Teile dargestellt sind und die Strömungsrichtung durch Pfeile angedeutet ist. Im Kältemittelkreislauf 1 verlässt das Kältemittel einen Kompressor 2, wird über ein geöffnetes Schaltventil SV2 zu einem Gaskühler 3 geleitet, wo es Wärme an die Umgebung abgibt. Von dort strömt es zu einem inneren Wärmeübertrager 4, wo es im Wärmetausch mit dem Kompressorsauggas, d.h. mit dem dem Kompressor 2 anschließend wieder zugeführten, gasförmigen Kältemittel, weiter abgekühlt wird. Das Kältemittel wird durch ein Expansionsventil XV1 entspannt und verdampft in einem Verdampfer 5, wobei gleichzeitig die Kabinenzuluft abgekühlt wird. Über ein Rückschlagventil RV, einen Kältemittelsammler 6 und den inneren Wärmeübertrager 4 strömt das Kältemittel anschließend wieder zum Kompressor 2.

Bei diesem Betrieb wird nur ein Teil des Kältemittelkreislaufs 1 durchströmt. Im nicht durchströmten, d.h. stillgelegten Teil des Kältemittelkreislaufs 1 sind ein Heizer 11, d.h. ein Wärmeübertrager, der die Kabinenzuluft im Heizbetrieb aufheizt, ein zweites Expansionsventil XV2, ein Wärmepumpen-Verdampfer 12, d.h. ein Wärmeübertrager, der im Heizbetrieb die über einen Motorkühlmittelkreislauf 51, welcher ebenfalls Teil der Klimaanlage ist, zugeführte Motorabwärme des Motors M aufnimmt, und ein Schaltventil SV1 angeordnet. Das Schaltventil SV1 ist in diesem Betriebszustand geschlossen.

Der Motorkühlmittelkreislauf 51 der Klimaanlage ist in den Figuren nur unvollständig dargestellt und beinhaltet nur einen Heizkreis mit einer Kühlmittel-Umlaufpumpe 52, ein erstes Kühlmittelventil HRV1, einen Heizkörper 53, ein zweites Kühlmittelventil HRV2, den Wärmepumpen-Verdampfer 12 und den Motor M, wobei der Motor-Kühlmittelkreislauf 51 grundsätzlich auch anders aufgebaut sein kann. Weitere Verzweigungen wie auch der Motorthermostat und der Kreislauf zum Kühler sind nicht dargestellt.

Das Kühlmittelventil HRV1 ist dabei im Kühlbetrieb geschlossen, wenn die maximale Kälteleistung gefordert ist, kann aber getaktet oder teilweise geöffnet sein, wenn im sogenannten Reheatbetrieb die Luft nach der Abkühlung (und meist Entfeuchtung) im Verdampfer 5 anschließend im Heizkörper 53 wieder erwärmt werden soll.

Der Heizer 11, der Verdampfer 5 und der Heizkörper 53 sind Teil eines Klimagerätes 54 (gestrichelt dargestellt), welches in der Regel in einer Armaturentafel des Kraftfahrzeuges angeordnet ist. Über ein nicht dargestelltes Gebläse kann Umluft oder Frischluft durch das Klimagerät 54 gefördert werden, wobei die Luft im Verdampfer 5 abkühlt und durch den Heizer 11 und den Heizkörper 53 erwärmt werden kann. Die im Klimagerät 54 temperierte Luft kann über geeignete Ausströmer (nicht dargestellt) dem Fahrzeuginnenraum zugeführt werden.

Da im Kühlbetrieb der Wärmepumpen-Verdampfer 12 auf einem tiefen Systemdruck ist und der Heizer 11 durch Öffnen des zweiten Expansionsventils XV2 ebenso auf Verdampferdruckniveau gelegt werden kann, tritt keine Verlagerung flüssigen Kältemittels in den im Kühlbetrieb nicht benötigten Teil des Kältemittelkreislaufs 1 auf. So sind sowohl der Wärmepumpen-Verdampfer 12 als auch der Heizer 11 auf höherer Temperatur als die dem tiefsten Systemdruck entsprechende Kondensationstemperatur.

Durch Gestaltung des Expansionsventils XV2 als absperrbares Expansionsventil und Gestaltung des Schaltventils SV1 als stromlos geschlossenes Schaltventil ist eine vollständige Absperrung des Heizers 11 möglich, was den aktuellen Sicherheitskonzepten entspricht. Falls das Expansionsventil nicht absperrbar, insbesondere nicht rückwärtsdicht ist, kann durch Hinzunahme eines Rückschlagventils eine Rückwärtsdruchströmung vermieden werden. Ist das Schaltventil SV1 zusätzlich so gestaltet, dass es rückwärts öffnet, so kann das Entstehen eines unzulässigen Hochdrucks zwischen dem Schaltventil SV1 und dem Expansionsventil XV2 vermieden werden. Alternativ kann die Kombination Schaltventil SV1 und Schaltventil SV2 als 3/2-Wege-Ventil dargestellt werden, wobei die Eigenschaften SV1 stromlos zu und rückwärts öffnend auch hier gelten sollen.

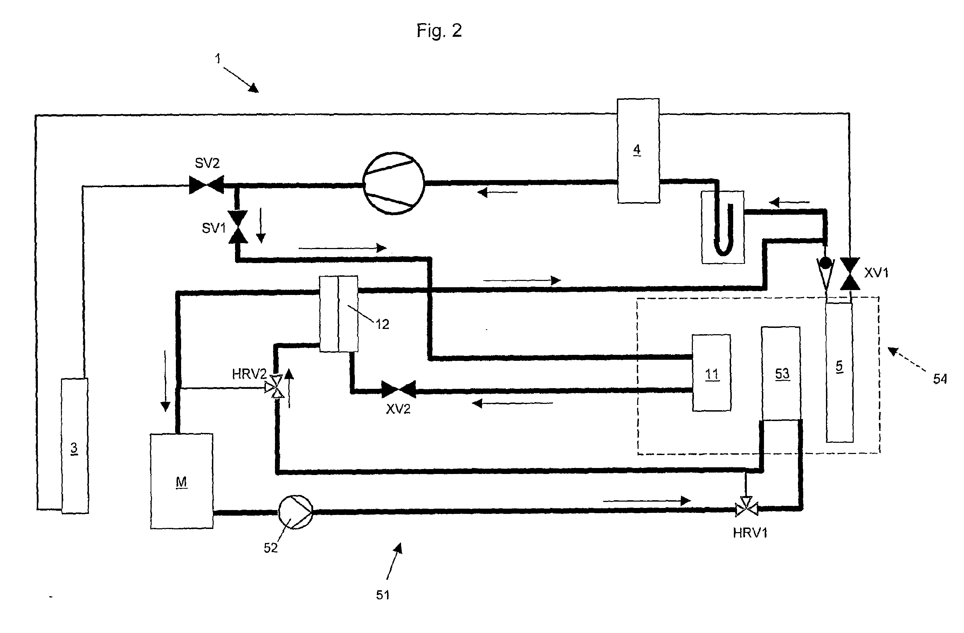

Fig. 2 zeigt den Heizbetrieb der Klimaanlage. Hierbei verlässt das Kältemittel mit hohem Druck und hoher Temperatur den Kompressor 2 und wird über das nunmehr offene Schaltventil SV1 zum Heizer 11 geleitet, wo es sich abkühlt und dabei die Kabinenzuluft erwärmt. Anschließend wird es im Expansionsventil XV2 auf niedrigen Systemdruck gedrosselt und verdampft im Wärmepumpen-Verdampfer 12, wobei es Wärme aus dem Kühlmittel des Motor-Kühlmittelkreisiaufs 51 aufnimmt. Zu diesem Zweck ist das Kühlmittelventil HRV2 so geschaltet, dass der Wärmepumpen-Verdampfer 12 mit Motorkühlmittel beaufschlagt wird. Je nach Betriebsbedingungen kann das Kältemittel den Wärmepumpen-Verdampfer 12 als Nassdampf (d.h. Dampf im Phasengleichgewicht mit einem Flüssigkeitsanteil) oder auch mehr oder weniger überhitzt verlassen. Zu einer Überhitzung kommt es insbesondere bei hohen Motor-Kühlmitteltemperaturen. Diese Überhitzung hängt auch von der im Kältemittelkreislauf 1 zirkulierenden Kältemittelmenge ab, was zur Erkennung eines Kältemittelmangels im aktiven Teil des Kältemittelkreislaufs 1 dienen kann. Anschließend strömt das Sauggas zum Sammler 6, durch den (in dieser Betriebsart funktionslosen) inneren Wärmeübertrager 4 zum Kompressor 2.

Die Funktion des Kühlmittelventils HRV1 richtet sich nach dem aktuellen Heizbedarf und kann je nach Anforderung ganz, teilweise oder gar nicht geöffnet sein. In dieser Schaltung ist der Wärmepumpen-Verdampfer 12 motorkühlmittelseitig nach dem Heizkörper 53 geschaltet. Es sind aber auch andere Einbindungen denkbar, beispielsweise vor dem Heizkörper oder in einem selbständigen Teilkreis des Motor-Kühlmittelkreislaufs 51. Es ist auch eine Ankopplung an eine vom Motor-Kühlmittelkreislauf 51 unabhängige Wärmequelle denkbar.

Das Rückschlagventil RV verhindert, dass Kältemittel in den kalten Verdampfer 5 und ggf. rückwärts durch das Expansionsventil XV1 in den kalten Gaskühler 3 gelangt und dort versackt. Allerdings gelingt das nicht vollständig, sondern durch die endliche Dichtheit des Rückschlagventils RV wird das Kältemittel stetig, wenn auch nur langsam, in den stillgelegten Teil des Kältemittelkreislaufs 1 (Verdampfer 5 und Gaskühler 3) strömen. Deshalb muss das Kältemittel von Zeit zu Zeit abgesaugt werden. Mit sinkendem Kältemittelinhalt im aktiven Teil des Kältemittelkreislaufs 1 kommt es zu einer - im Vergleich zum Betrieb ohne Kältemittelmangel - zunehmenden Überhitzung am Wärmepumpen-Verdampfer 12 und auch die Temperatur des Kältemittels am Austritt des Kompressors 2 ist höher als bei den Zuständen ohne Kältemittelmangel. Ein Vergleich dieser Temperatur mit einer in einem Kennfeld abgespeicherten Solltemperatur, die von Saugdruck, Hochdruck und Kühlmitteltemperatur (oder nur einzelnen der genannten Größen) abhängen kann, erlaubt es, den Bedarf einer Kältemittelrückführung in den aktiven Teil des Kältemittelkreislaufs 1 zu erkennen.

Alternativ kann ein Mangel an Kältemittel im aktiven Kältemittelkreislauf erkannt werden durch eine Abweichung des Saugdrucks von einem vorgegebenen Toleranzbereich oder eine Abweichung der Überhitzung des Kältemittels nach Wärmepumpen-Verdampfer 12 von einem vorgegebenen Toleranzbereich.

Der Toleranzbereich hängt von mehreren Parametern ab, im wesentlichen von der Temperatur des Kältemittels am Eintritt des Wärmepumpen-Verdampfers 12, kann aber auch vom gewählten Hochdruck, der Kompressordrehzahl oder der Lufttemperatur am Heizer 11 abhängen.

Stark instationäre Betriebszustände (wie z.B. bei variierender Motor- und damit Kompressordrehzahl) können vorübergehend zu Bedingungen im Kältemittelkreislauf 1 führen, die einen Mangel an Kältemittel vortäuschen. Deshalb ist durch entsprechende Filterung der Daten (z.B. der Forderung nach einer zeitlich schwach variierenden Drehzahl) dafür zu sorgen, dass nur durch die Betrachtung hinreichend stationäre Betriebszustände eine Kältemittelrückführung eingeleitet wird.

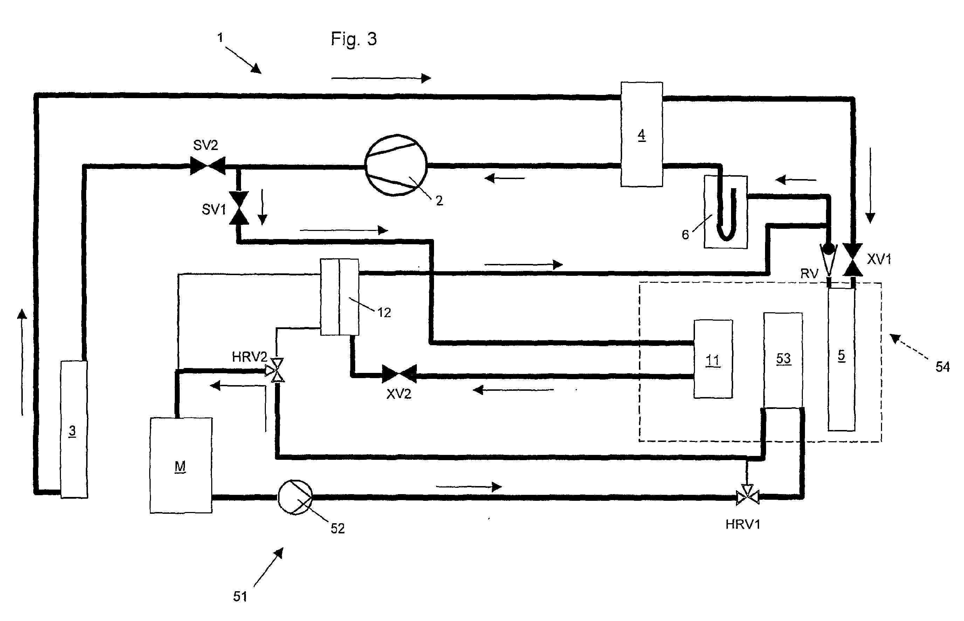

Die Verhältnisse bei der Kältemittelrückführung sind in Fig. 3 dargestellt. Hierbei ist, wie im Heizbetrieb, das Schaltventil SV1 offen und das Schaltventil SV2 geschlossen. Zum Absaugen des Kältemittels aus dem im Heizbetrieb stillgelegten Teil des Kältemittelkreislaufs 1 muss der Saugdruck so weit abgesenkt werden, dass er niedriger ist als der durch die Umgebungstemperatur bestimmte Druck im Gaskühler 3 und Verdampfer 5. Dies wird am einfachsten erreicht, indem im Motor-Kühlmittelkreislauf 51 das Kühlmittelventil HRV2 so geschaltet ist, dass der Wärmepumpen-Verdampfer 12 nicht mehr vom Motorkühlmittel durchströmt wird. Da keine Wärme mehr zugeführt wird, kühlt sich der Wärmepumpen-Verdampfer 12 ab und damit sinkt auch der Saugdruck. Wenn der Saugdruck des Kompressors 2 kleiner ist als der Druck im Verdampfer 5, öffnet das Rückschlagventil RV und der Verdampfer 5 wird entleert. Wird zusätzlich das Expansionsventil XV1 geöffnet, dann wird auch der Gaskühler 3 und die Leitung zwischen dem Gaskühler 3 und dem Expansionsventil XV1 entleert.

Die Wärmepumpe liefert während des Absaugens weiterhin Heizleistung, die nur langsam absinkt, so dass durch die Nutzer kein Einbruch der Zuheizfunktion feststellbar ist.

Die Funktion des Kühlmittelventils HRV1 richtet sich nach dem aktuellen Heizbedarf und kann je nach Anforderung ganz, teilweise oder gar nicht geöffnet sein.

Das Ende der Kältemittelrückführung kann durch mehrere Möglichkeiten festgelegt werden:
- Heißgastemperatur unterschreitet Schwellwert,
- Saugdruck unterschreitet Schwellwert (ggf. Abhängig von Umgebungstemperatur und Kompressordrehzahl)
- Beenden der Kältemittelrückführung nach einer vorgegebenen Zeit
- Beenden der Kältemittelrückführung bei unterschreiten einer vorgegebenen minimalen Heizleistung (Abhängig von Außentemperatur und Kompressordrehzahl)

### Bezugszeichenliste

- 1: Kältemittelkreislauf
- 2: Kompressor
- 3: Gaskühler
- 4: innerer Wärmetauscher
- 5: Verdampfer
- 6: Sammler
- 11: Heizer
- 12: Wärmepumpen-Verdampfer
- 51: Motor-Kühlmittelkreislauf
- 52: Kühlmittel-Umlaufpumpe
- 53: Heizkörper
- 54: Klimagerät

- HRV1, HRV2: Kühlmittelventil
- M: Motor
- RV: Rückschlagventil
- SV1, SV2: Schaltventil
- XV1, XV2: Expansionsventil

## Patentansprüche

1. Klimaanlage für ein Kraftfahrzeug mit einem Kältemittelkreislauf (1) mit mehreren Wärmeübertragem durch die ein Kältemittel leitbar ist, wovon ein Wärmeübertrager (12) zugleich Teil eines Kühlmittelkreislaufs ist, **dadurch gekennzeichnet, dass** bei Bedarf eine Kältemittelrückführung aus im Heizbetrieb stillgelegten Teilen des Kältemittelkreislaufs (1) in einen im Heizbetrieb aktiven Teil des Kältemittelkreislaufs (1) vorgesehen ist, wobei der Wärmeübertrager (12) für den Kältemittelrückführungsbetrieb vom Zufluss des Kühlmittelkreislaufs trennbar ist.

2. Klimaanlage nach Anspruch 1, **dadurch gekennzeichnet, dass** der Kühlmittelkreislauf ein Motor-Kühlmittelkreislauf (51) ist.

3. Klimaanlage nach Anspruch 1 oder 2, **dadurch gekennzeichnet, dass** Mittel zum Ermitteln eines Kältemittelbedarfs vorgesehen sind.

4. Klimaanlage nach einem der vorhergehenden Ansprüche, **gekennzeichnet durch** Mittel zum Ermitteln, ob ausreichend Kältemittel in dem im Heizbetrieb von Kältemittel durchströmten Teil des Kältemittelkreislaufs (1) vorhanden ist.

5. Klimaanlage nach einem der Ansprüche 3 oder 4, **dadurch gekennzeichnet, dass** als Mittel zum Ermitteln eines Kältemittelbedarfs ein oder mehrere Temperatursensoren und/oder Drucksensoren vorgesehen ist.

6. Klimaanlage nach Anspruch 5, **dadurch gekennzeichnet, dass** der Temperatursensor im Kältemittelkreislauf, in Strömungsrichtung des Kältemittels gesehen, nach dem Kompressor (2) vor einem Heizer (11) angeordnet ist.

7. Klimaanlage nach Anspruch 5, **dadurch gekennzeichnet, dass** der Drucksensor im Kältemittelkreislauf, in Strömungsrichtung des Kältemittels gesehen, vor dem Kompressor (2) angeordnet ist.

8. Klimaanlage nach einem der vorhergehenden Ansprüche, **dadurch gekennzeichnet, dass** im Kältemittelkreislauf (1) ein Rückschlagventil (RV) vorgesehen ist, welches im Heizbetrieb aktive Teile des Kältemittelkreislaufs (1) von im Heizbetrieb stillgelegten Teilen des Kältemittelkreislaufs (1) trennt und im Kältemittelrückführungsbetrieb Kältemittel von den im Heizbetrieb stillgelegten Teilen des Kältemittelkreislaufs (1) zu den im Heizbetrieb aktiven Teilen des Kältemittelkreislaufs (1) durchläßt.

9. Verfahren zum Betreiben einer Klimaanlage gemäß einem der Ansprüche 1 bis 8, wobei zumindest im Heizbetrieb der Bedarf an Kältemittel in einem im Heizbetrieb aktiven Teil des Kältemittelkreislaufs (1) ermittelt wird und entsprechend Kältemittel aus einem anderen, im Heizbetrieb stillgelegten Teil des Kältemittelkreislaufs (1) abgezogen und dem im Heizbetrieb aktiven Teil des Kältemittelkreislaufs (1) zugeführt wird.

10. Verfahren nach Anspruch 9, **dadurch gekennzeichnet, dass** zur Ermittlung eines Bedarfs an Kältemittel mindestens ein Parameter oder eine beliebige Kombination von Parametern überwacht wird, wobei die überwachten Parameter die Heißgastemperatur und/oder den Saugdruck und/oder die Temperatur des Kältemittels, insbesondere am Austritt des Verdampfers und/oder den Hockdruck und/oder die Kompressordrehzahl umfassen.

11. Verfahren nach Anspruch 10, **dadurch gekennzeichnet, dass** für die Überwachung der genannten Parameter Schwellwerte vorgebbar sind, wobei bei der Überwachung ein Überschreiten und/oder ein Unterschreiten der vorgebbaren Schwellwerte erkannt wird.

12. Verfahren nach Anspruch 11, **dadurch gekennzeichnet, dass** die Schwellwerte aus Kennfeldern ableitbar sind, welche von den Parametern und/oder Parameterkombinationen bestimmt werden.

13. Verfahren nach einem der Ansprüche 9 bis 12, **dadurch gekennzeichnet, dass** die Kältemittelrückführung nach einer vorgegebenen Zeit oder nach Unterschreiten einer vorgegebenen, minimalen Heizleistung oder nach dem Unterschreiten eines Heißgastemperatur-Schwellwertes oder eines Saugdruck-Schwellwertes beendet wird.

14. Verfahren nach einem der Ansprüche 9 bis 13, **dadurch gekennzeichnet, dass** ein Expansionsventil (XV1) in einem im Heizbetrieb aktiven Teil des Kältemittelkreislaufs (1) geschlossen und die Luftführung im Klimagerät auf Umluft geschaltet wird.

15. Verfahren nach Anspruch 14, **dadurch gekennzeichnet, dass** nach Unterschreiten eines vorgebbaren Saugdruckes das Expansionsventil (XV1) wieder geöffnet wird.

16. Verfahren nach einem der Ansprüche 9 bis 15, **dadurch gekennzeichnet, dass** ein Lüfter zugeschaltet wird, um einen Gaskühler (3) mit Luft zu beaufschlagen.

17. Verfahren nach einem der Ansprüche 9 bis 16, **dadurch gekennzeichnet, dass** bei Betrieb des Wärmetauschers (12) in einem Heizbetrieb dieser Wärmetauscher (12) bei Überschreiten eines oberen Grenzwertes durch den Saugdruck vom Kühlmittelkreislauf abgetrennt wird.

18. Verfahren nach Anspruch 17, **dadurch gekennzeichnet, dass** der Wärmetauscher (12) nach Unterschreiten eines zweiten Grenzwertes durch den Saugdruck wieder in den Kühlmittelkreislauf eingebunden wird.

19. Verfahren nach einem der Ansprüche 9 bis 18, **dadurch gekennzeichnet, dass** ein konstanter Saugdruck über den Kühlmittelfluss im Verdampfer einstellbar ist.

## Claims

1. An air-conditioning system for a motor vehicle, having a refrigerant circuit (1) with a plurality of heat exchangers through which a refrigerant can be passed, of which one heat exchanger (12) is simultaneously part of a coolant circuit, on demand refrigerant recirculation from parts of the refrigerant circuit (1) which are inoperative in heating mode into a part of the refrigerant circuit (1) which is active in heating mode is provided, **characterized in that** the heat exchanger (12) can be disconnected from the inflow of the coolant circuit for the refrigerant recirculation mode.

2. The air-conditioning system as claimed in claim 1, **characterized in that** the coolant circuit is an engine coolant circuit (51).

3. The air-conditioning system as claimed in one of the preceding claims, **characterized in that** there are means for determining a demand for refrigerant.

4. The air-conditioning system as claimed in one of the preceding claims, **characterized by** means for determining whether there is sufficient refrigerant in that part of the refrigerant circuit (1) through which refrigerant flows in heating mode.

5. The air-conditioning system as claimed in claim 3 or 4, **characterized in that** one or more temperature sensors and/or pressure sensors are provided as means for determining a demand for refrigerant.

6. The air-conditioning system as claimed in claim 5, **characterized in that** the temperature sensor in the refrigerant circuit is provided downstream of the compressor (2) and upstream of a heater (11), as seen in the direction of flow of the refrigerant.

7. The air-conditioning system as claimed in claim 5, **characterized in that** the pressure sensor in the refrigerant circuit is arranged upstream of the compressor (2), as seen in the direction of flow of the refrigerant.

8. The air-conditioning system as claimed in one of the preceding claims, **characterized in that** a nonreturn valve (RV) is provided in the refrigerant circuit (1), which nonreturn valve, in heating mode, separates active parts of the refrigerant circuit (1) from parts of the refrigerant circuit (1) which are inoperative in heating mode and, in the refrigerant recirculation mode, allows refrigerant to pass from those parts of the refrigerant circuit (1) which are inoperative in heating mode to those parts of the refrigerant circuit (1) which are active in heating mode.

9. A method for operating the air-conditioning system as claimed in one of claims 1 to 8, in which, at least in heating mode, the demand for refrigerant in a part of the refrigerant circuit (1) which is active in the heating mode is determined, and accordingly refrigerant is withdrawn from another part, which is inoperative in the heating mode, of the refrigerant circuit (1) and fed to that part of the refrigerant circuit (1) which is active in the heating mode.

10. The method as claimed in claim 9, **characterized in that** at least one parameter or any desired combination of parameters is monitored to determine a demand for refrigerant, the parameters which are monitored comprising the hot-gas temperature and/or the suction pressure and/or the temperature of the refrigerant, in particular at the outlet of the evaporator, and/or the high pressure and/or the compressor rotational speed.

11. The method as claimed in claim 10, **characterized in that** it is possible to predetermine threshold values for the monitoring of said parameters, the monitoring then detecting values which exceed or fall below the predeterminable threshold values.

12. The method as claimed in claim 11, **characterized in that** the threshold values can be derived from characteristic diagrams which are determined from the parameters and/or combinations of parameters.

13. The method as claimed in one of claims 9 to 12, **characterized in that** the refrigerant recirculation is terminated after a predetermined time or after the heating power has dropped below a predetermined, minimum heating power or after a hot-gas temperature has dropped below a hot-gas temperature threshold value or after a suction pressure has dropped below a suction pressure threshold value.

14. The method as claimed in one of claims 9 to 13, **characterized in that** an expansion valve (XV1) in a part of the refrigerant circuit (1) which is active in the heating mode is closed and the air routing in the air-conditioning equipment is switched to recirculated air.

15. The method as claimed in claim 14, **characterized in that** the expansion valve (XVI) is opened again after the suction pressure has dropped below a predeterminable suction pressure level.

16. The method as claimed in one of claims 9 to 15, **characterized in that** a fan is switched on in order to apply air to a gas cooler (3).

17. The method as claimed in one of claims 9 to 16, **characterized in that** when the heat exchanger (12) is operated in a heating mode, this heat exchanger (12) is disconnected from the coolant circuit when the suction pressure exceeds an upper limit value.

18. The method as claimed in claim 17, **characterized in that** the heat exchanger (12) is connected back into the coolant circuit after the suction pressure has dropped below a second limit value.

19. The method as claimed in one of claims 9 to 18, **characterized in that** a constant suction pressure can be set by means of the flow of coolant in the evaporator.

## Revendications

1. Système de climatisation pour un véhicule automobile, comprenant un circuit de fluide frigorigène (1) comportant plusieurs échangeurs de chaleur à travers lesquels un fluide frigorigène peut être dirigé, échangeurs de chaleur dont un échangeur de chaleur (12) fait en même temps partie d'un circuit de liquide de refroidissement,
**caractérisé en ce que**, en cas de besoin, il est prévu une recirculation du fluide frigorigène provenant de parties du circuit de fluide frigorigène (1), arrêtées au cours du fonctionnement en mode chauffage, et passant dans une partie du circuit de fluide frigorigène (1) active au cours du fonctionnement en mode chauffage, où l'échangeur de chaleur (12), pour le fonctionnement en mode recirculation du fluide frigorigène, peut être séparé de l'arrivée du circuit de liquide de refroidissement.

2. Système de climatisation selon la revendication 1, **caractérisé en ce que** le circuit de liquide de refroidissement est un circuit (51) de liquide de refroidissement du moteur.

3. Système de climatisation selon la revendication 1 ou 2, **caractérisé en ce qu'**il est prévu des moyens permettant de déterminer des besoins en fluide frigorigène.

4. Système de climatisation selon l'une quelconque des revendications précédentes, **caractérisé en ce que** des moyens permettent de déterminer si du fluide frigorigène est en quantité suffisante dans la partie du circuit de fluide frigorigène (1), traversée par le fluide frigorigène au cours du fonctionnement en mode chauffage.

5. Système de climatisation selon la revendication 3 ou 4, **caractérisé en ce qu'**il est prévu un ou plusieurs capteurs de température et / ou capteurs de pression servant de moyens pour déterminer les besoins en fluide frigorigène.

6. Système de climatisation selon la revendication 5, **caractérisé en ce que** le capteur de température placé dans le circuit de fluide frigorigène, vu dans la direction d'écoulement du fluide frigorigène, est disposé en aval du compresseur (2) et en amont d'un dispositif de chauffage (11).

7. Système de climatisation selon la revendication 5, **caractérisé en ce que** le capteur de pression placé dans le circuit de fluide frigorigène, vu dans la direction d'écoulement du fluide frigorigène, est disposé en amont du compresseur (2).

8. Système de climatisation selon l'une quelconque des revendications précédentes, **caractérisé en ce qu'**il est prévu, dans le circuit de fluide frigorigène (1), un clapet antiretour (RV) qui, au cours du fonctionnement en mode chauffage, sépare des parties actives du circuit de fluide frigorigène (1), de parties du circuit de fluide frigorigène (1), arrêtées au cours du fonctionnement en mode chauffage, et, au cours du fonctionnement en mode recirculation du fluide frigorigène, ledit clapet antiretour laisse passer le fluide frigorigène passant des parties du circuit de fluide frigorigène (1), arrêtées au cours du fonctionnement en mode chauffage, dans les parties du circuit de fluide frigorigène (1) actives au cours du fonctionnement en mode chauffage.

9. Procédé de fonctionnement d'un système de climatisation selon l'une quelconque des revendications 1 à 8, où, au moins au cours du fonctionnement en mode chauffage, on détermine les besoins en fluide frigorigène, dans une partie du circuit de fluide frigorigène (1) active au cours du fonctionnement en mode chauffage, et, en conséquence, du fluide frigorigène est extrait d'une autre partie du circuit de fluide frigorigène (1), arrêtée au cours du fonctionnement en mode chauffage, et fourni à la partie du circuit de fluide frigorigène (1) active au cours du fonctionnement en mode chauffage.

10. Procédé selon la revendication 9, **caractérisé en ce que**, pour déterminer des besoins en fluide frigorigène, on contrôle au moins un paramètre ou une combinaison quelconque de paramètres, où les paramètres contrôlés englobent la température des gaz chauds et / ou la pression d'aspiration et / ou la température du fluide frigorigène, en particulier au niveau de la sortie de l'évaporateur, et / ou la haute pression et / ou la vitesse de rotation du compresseur.

11. Procédé selon la revendication 10, **caractérisé en ce que** des valeurs de seuil sont prédéfinies pour le contrôle des paramètres cités, où, lors du contrôle, on détecte un dépassement de la limite supérieure et / ou un dépassement de la limite inférieure des valeurs de seuil prédéfinies.

12. Procédé selon la revendication 11, **caractérisé en ce que** les valeurs de seuil peuvent être déduites de cartographies qui sont déterminées par les paramètres et / ou par les combinaisons de paramètres.

13. Procédé selon l'une quelconque des revendications 9 à 12, **caractérisé en ce que** la recirculation de fluide frigorigéne est achevée après un laps de temps prédéfini ou après le dépassement de la limite inférieure d'une puissance de chauffage minimum prédéfinie ou après le dépassement de la limite inférieure d'une valeur de seuil de la température de gaz chauds ou d'une valeur de seuil de la pression d'aspiration.

14. Procédé selon l'une quelconque des revendications 9 à 13, **caractérisé en ce qu'**un détendeur (XV1) est fermé dans une partie du circuit de fluide frigorigène (1) active au cours du fonctionnement en mode chauffage, le guidage d'air, dans le climatiseur, passant en mode air de circulation.

15. Procédé selon la revendication 14, **caractérisé en ce que** le détendeur (XV1) est à nouveau ouvert après dépassement de la limite inférieure d'une pression d'aspiration prédéfinie.

16. Procédé selon l'une quelconque des revendications 9 à 15, **caractérisé en ce qu'**un ventilateur est activé pour alimenter en air un refroidisseur de gaz (3).

17. Procédé selon l'une quelconque des revendications 9 à 16, **caractérisé en ce que**, au cours du fonctionnement de l'échangeur de chaleur (12), en mode chauffage, cet échangeur de chaleur (12) est séparé du circuit de liquide de refroidissement, en cas de dépassement, par la pression d'aspiration, d'une valeur limite supérieure.

18. Procédé selon la revendication 17, **caractérisé en ce que** l'échangeur de chaleur (12) est à nouveau intégré au circuit de liquide de refroidissement, en cas de dépassement, par la pression d'aspiration, d'une deuxième valeur limite inférieure.

19. Procédé selon l'une quelconque des revendications 9 à 18, **caractérisé en ce qu'**une pression d'aspiration constante est réglable par le flux de liquide de refroidissement circulant dans l'évaporateur.
